Europäisches Patentamt

European Patent Office

Office européen des brevets

(19)

(11) Veröffentlichungsnummer : **0 407 866 B1**

(12) # EUROPÄISCHE PATENTSCHRIFT

(45) Veröffentlichungstag der Patentschrift :
23.09.92 Patentblatt 92/39

(51) Int. Cl.$^5$ : **G01B 5/12**

(21) Anmeldenummer : 90112724.1

(22) Anmeldetag : 04.07.90

(54) Vorrichtung zum Messen der Innendurchmesser von Rohren.

(30) Priorität : 12.07.89 DE 3922937

(43) Veröffentlichungstag der Anmeldung :
16.01.91 Patentblatt 91/03

(45) Bekanntmachung des Hinweises auf die
Patenterteilung :
23.09.92 Patentblatt 92/39

(84) Benannte Vertragsstaaten :
DE ES FR GB IT SE

(56) Entgegenhaltungen :
DE-A- 2 813 842
DE-A- 3 103 819
DE-C- 3 238 336
US-A- 4 045 877
US-A- 4 809 440

(73) Patentinhaber : **Mauser-Werke Oberndorf
GmbH
Teckstrasse 11
W-7238 Oberndorf (DE)**

(72) Erfinder : **Langowski, Andreas
Im Esel 29
7230 Schramberg (DE)**
Erfinder : **Schultz, Wolfgang
Birkenweg 21
7741 Tennenbronn (DE)**
Erfinder : **Walter, Gerhard
Heuweg 7
7297 Alpirsbach 1 (DE)**

(74) Vertreter : **Hofmann, Gerhard, Dipl.-Ing.
Patentassessor et al
Stephanstrasse 49
W-8500 Nürnberg 30 (DE)**

EP 0 407 866 B1

## Beschreibung

Die Erfindung betrifft eine Vorrichtung zum Messen der Innendurchmesser von Rohren, insbesondere der Kaliber von Waffenrohren, im wesentlichen bestehend aus einem Meßkopf mit radial wirkenden Tastern, die mit einer axial beweglichen, unter Federkraft stehenden Stange wirkverbunden sind, welche mit einer Meßwerterfassungseinheit und einer Meßwertanzeige in Verbindung steht.

Aus der DE 32 38 336 C2 ist ein Meßgerät zum Messen von Innendurchmessern bekannt, dessen Meßkopf einen zu der Längsachse des Meßgerätes radial bewegbaren Meßwertgeber aufweist. Diese radiale Bewegung des Meßwertgebers bzw. von Tastern wird auf eine axial bewegbare Stange übertragen, die mit einer Meßuhr in Wirkverbindung steht. Die Meßstange steht unter der Wirkung einer Feder.

Aus der DE 31 03 819 A1 ist ein Instrument zur Messung von Innendurchmessern bekannt, bei dem Meßspitzen durch ein bewegliches Meßsystem betätigt werden, welches durch eine Stange gebildet ist, die axial beweglich ist. Die Stange steht auch bei diesem Instrument unter der Wirkung einer Feder und liegt an der Meßspitze eines Komparators an. Die radiale Bewegung der Meßtaster wird auf die Meßstange in eine axiale Bewegungsrichtung übertragen und der Meßwerterfassungseinheit mitgeteilt.

Diese vorgenannten konventionellen Meßmethoden erlauben eine Messung eines Innendurchmessers von Rohren nur bei ausgebautem Rohr und sind dabei in erhöhtem Maße von der Bedienungsperson beeinflußbar. Nachteilig ist vor allen Dingen, daß mit diesen bekannten Meßgeräten immer nur an einer bestimmten, vorher ermittelten Meßposition ein Maß abgenommen werden kann und die Messung an mehreren axial voneinander entfernten Stellen des Innendurchmessers von Rohren kontinuierlich nicht möglich ist. Bei der Messung des Kalibers von Waffenrohren ist jedoch von entscheidender Wichtigkeit, daß eine Vielzahl von axial voneinander entfernten Meßpunkten erfaßt wird. Dazu kommt noch die weitere Forderung, daß ein solches Waffenrohr in einem relativ schnellen Meßvorgang und vom Bedienungspersonal nahezu unbeeinflußbar auch bei extremen Witterungsverhältnissen im eingebauten Zustand vermessen werden muß.

Es ist deshalb Aufgabe der Erfindung, eine Vorrichtung zum Messen der Innendurchmesser von Rohren und insbesondere der Kaliber von Waffenrohren der eingangs genannten Art zu schaffen, die ein schnelleres und sicheres Messen von einer Vielzahl von axial voneinander entfernten Punkten im Rohr erlaubt und vom Bedienungspersonal so gut wie nicht beeinflußbar ist.

Erfindungsgemäß wird die Aufgabe bei der eingangs gennanten Vorrichtung dadurch gelöst, daß der Meßkopf in einem Rohrgehäuse axial beweglich angeordnet ist, in dem ein Kalibrierring mit einem dem Solldurchmesser des Rohres entsprechenden Innendurchmesser für das Kalibrieren des Meßkopfes einsetzbar ist, und die vom Meßkopf axial zurücklegbare Wegstrecke durch eine integrierte Längenmeßeinrichtung erfaßt wird, wobei der Meßkopf und die Längenmeßeinrichtung an eine gemeinsame Meßwerterfassungs- und -auswerteeinheit angeschlossen sind.

In Ausbildung der Erfindung kann der Meßkopf einen Wegaufnehmer aufweisen, der mechanisch mit der Längenmeßeinrichtung und elektrisch mit der gemeinsamen Meßwerterfassungs- und -auswerteeinheit verbunden ist.

In noch weiterer Ausbildung der Erfindung kann der Meßkopf mit einem elastischen Schlauch verbunden sein, dessen axiale Bewegung durch ein Reibrad abgenommen wird, und daß innerhalb des Schlauches eine elektrische Leitung vom Wegaufnehmer des Meßkopfes zur gemeinsamen Meßwerterfassungseinheit eingesetzt ist, und daß ferner an dem Schlauch ein Endschalter für die Lagebestimmung des Kalibriervorganges antastet, der ebenfalls mit der Meßwerterfassungs- und auswerteeinheit wirkverbunden ist.

Schließlich kann das Rohrgehäuse für die Aufnahme des Meßkopfes und des Wegaufnehmers an das Gehäuse für die Längenmeßeinrichtung und für die Meßwerterfassungs- und -auswerteeinheit angeschlossen sein, wobei das Rohrgehäuse stirnseitig an der vorderen Stirnseite des Waffenrohres anliegt und in einem Adapter oder der Rohrmündungsbremse bei Waffenrohren axial geführt ist.

Mit diesen erfindungsgemäßen Merkmalen wird die vorstehende genannte Aufgabe in optimaler Weise erfüllt. In der Ausgangsstellung vor Beginn einer Messung befindet sich der Meßkopf in dem Rohrgehäuse, wo mit Hilfe eines Kalibrierringes und eines Endschalters die Meßwerte des Meßkopfes und des Kalibrierringes gemeinsam auf Null gesetzt werden. Wird nun der Meßkopf mittels des flexiblen Gummischlauches axial durch das zu messende Rohr geschoben, so meldet das Reibrad mit einem Drehgeber nach vorbestimmten Abständen die erreichten Positionen an die Meßwertauswerteeinheit, in welcher das jeweilig erreichte Kalibriermaß mit einem gespeicherten und der erfaßten Position zugeordneten Meßwert vergleicht. Mit diesem Meßgerät werden dadurch in einem Arbeitsvorgang sowohl die Innendurchmesser als auch ihre Positionen in axialer Entfernung zueinander exakt vermessen und mit eingespeicherten Sollwerten verglichen. Die Meßwertauswerteeinheit und eine angeschlossene Anzeige bzw. ein angeschlossener Drucker geben das ermittelte Meßergebnis der Bedienungsperson bekannt.

In der Zeichnung ist ein Beispiel der Erfindung dargestellt. Es zeigt:

2

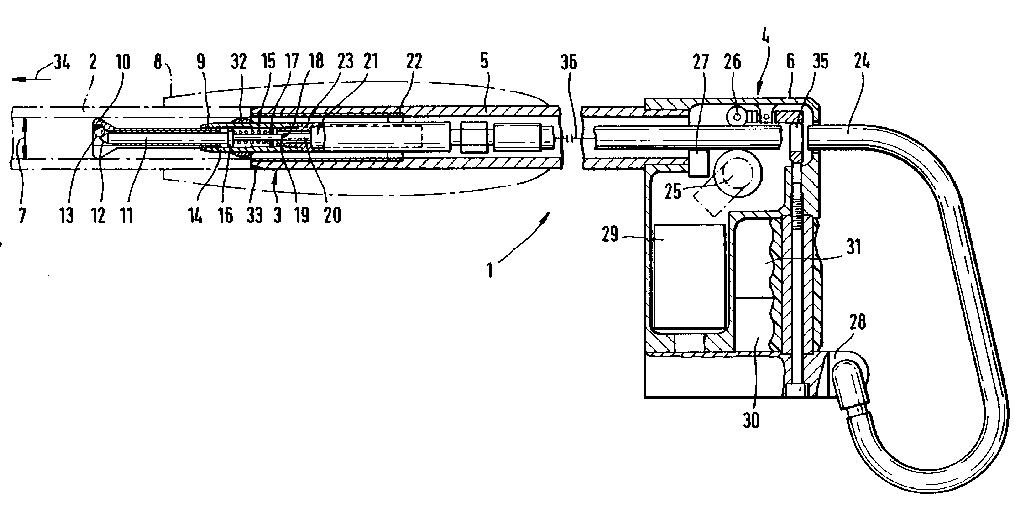

Figur 1 die Vorrichtung zum Messen der Innendurchmesser von Rohren im Schnitt.

Die Vorrichtung zum Messen 1 der Innendurchmesser von Rohren 2 besteht im wesentlichen aus zwei verschiedenen Meßeinheiten 3 und 4, die in miteinander verbundenen Gehäusen 5 und 6 eingesetzt sind. In Figur 1 ist die Vorrichtung zum Messen 1 im Einsatz für das Messen des Innendurchmessers bzw. des Kalibers 7 eines Waffenrohres 2 mit einer Mündungsbremse 8 dargestellt.

Die Meßeinheit 3 besteht aus einem Meßkopf 9, der aus radial bewegbaren Meßtastern oder Meßfühlern 10 gebildet ist, deren Radialbewegung durch eine Stange 11 bewirkt wird, die mit ihrer vorderen Konusspitze 12 gegen ein Spreizelement 13, beispielsweise einer Kugel, ansteht. Die Stange 11 ist in ein Zylindergehäuse 14 eingesetzt und steht unter der Wirkung einer Druckfeder, die sich einerseits an einem Bund 16 der Stange 11 und andererseits an einem Ring 17 im Zylindergehäuse 14 abstützt. Das hintere Stirnende 18 der Stange 11 steht gegen die vordere Stirnfläche 19 eines Stiftes 20 eines Wegaufnehmers 21 an. Der Meßkopf 9 und der Wegaufnehmer 21 befinden sich in einem Rohrgehäuse 5 und sind in diesem Rohrgehäuse 5 axial verschiebbar angeordnet.

In dem Rohrgehäuse 5 ist ferner ein Kalibrierring 22 vorgesehen, dessen Innendurchmesser jeweils dem Innendurchmesser des zu vermessenden Rohres entspricht.

Der Wegaufnehmer 21 ist innerhalb eines Gehäuses 23 eingebaut, welches an seinem rückseitigen Ende mit einem flexiblen Schlauch 24 verbunden ist. Dieser Schlauch 24 ist axial durch das Rohrgehäuse 5 geführt und tritt in das Gehäuse 6 der zweiten Meßeinheit 4 ein. Die Mantelfläche des Schlauches 24 steht mit einem Reibrad 25 in Wirkverbindung, welches an einen Drehgeber 26 zur Umwandlung einer mechanischen Bewegung in ein elektrisches Signal angeschlossen ist. Die Mantelfläche des Schlauches 24 steht darüberhinaus mit einem Endschalter 27 in Verbindung. Das Ende des Schlauches 24 ist an einen Ansatz oder Flansch 28 des Gehäuses 4 angebunden.

In dem Gehäuse 4 sind außerdem ein Mikroprozessor 29 und eine Spannungsversorgung 30 sowie eine Meßwertanzeige 31 untergebracht. Eine Meßwertanzeige kann in üblicherweise auch außerhalb des Gehäuses 4 eingerichtet sein, wobei in diesem Fall von der Meßwertauswerteeinheit mit Mikroprozessor 29 eine elektrische Verbindung zu einer Anzeigeeinheit und gegebenenfalls zu einem Drucker hergestellt wird.

Vor dem Beginn der Messung eines Innendurchmessers eines Rohres 2 befindet sich der Meßkopf 9 mit den Meßtastern 10 innerhalb des Rohrgehäuses 5. Hier wird zunächst die Kalibrierung vorgenommen, was bedeutet, daß die Meßtaster auf das Innenmaß des Kalibrierringes 22 eingestellt werden. Das Rohrgehäuse 5 wird sodann an die Stirnseite 33 des Rohres 2 gesetzt. Diese Position wird durch den Endschalter gemeinsam mit dem Kalibriermaß auf Null gesetzt. Der Meßkopf 9 wird sodann bei radialer und axialer Führung innerhalb der in den Beispielen gezeigten Mündungsbremse 8, die auch ein entsprechender Adapter bei einem Rohr 2 sein kann, in Richtung des Pfeiles 34 verschoben. Bei dieser axialen Bewegung des Meßkopfes 9 werden vorher festgelegte Meßpositionen, die dem Mikroprozessor 29 eingegeben sind, überschritten. Diese axiale Bewegung in Richtung des Pfeils 34 wird durch das Reibrad 25 mit Drehgeber 26 festgehalten und als Längenmaß dem Mikroprozessor 29 mitgeteilt. Bei dem Überschreiten einer festgelegten Position im Rohr 2 wird auf diese Weise gleichzeitig der Innendurchmesser 7 des Rohres 2 ermittelt. Die Meßwertauswerteeinheit mit Mikroprozessor 29 vergleicht das jeweilige erfaßte Maß mit einem gespeicherten Sollwert der zugehörigen Position im Rohr 2 und signalisiert beispielsweise durch Leuchtdioden von unterschiedlicher Farbe das Meßergebnis als "gut" oder "schlecht". Das ermittelte Maß wird darüberhinaus natürlich auch in absoluten Werten festgehalten, um einen Vergleich mit einer vorgegebenen Istkurve zu ermöglichen.

Die Messung des Kalibers an einer Vielzahl von axial zueinander entfernten Meßpunkten ist insbesondere bei Waffenrohren notwendig. Anhand einer Rohrausschußkurve kann dann nämlich die Einsatzfähigkeit des Waffenrohres beurteilt werden. Eine solche Messung von Waffenrohren muß aufgrund Gegebenheiten die Forderungen erfüllen, daß die Messung schnell durchgeführt werden kann, daß die Messung vom Bedienungspersonal so gut wie unbeeinflußbar ist und daß die Messung auch bei extremen Witterungsverhältnissen und ohne Ausbau des Waffenrohres aus der Waffe erfolgen kann. Das erfindungsgemäße Rohrinnenmeßgerät besteht entsprechend der vorstehend geschilderten Ausführung aus zwei verschiedenen Meßsystemen, deren Meßwerte in einer fest programmierten Meßwertauswerteeinheit miteinander verknüpft werden. Dabei hat zunächst der Meßkopf 9 die Aufgabe, das Kalibermaß in eine axiale Bewegung umzulenken. Dies erfolgt durch die axiale Bewegung der Stange 11 innerhalb der sich radial während des Meßvorganges bewegenden Meßtaster 10, wobei die axiale Bewegung der Stange 11 gegen den Stift 20 des Meßaufnehmers 21 wirkt und so das Maß für die an bestimmten Positionen gemessenen Kaliber darstellt. Die Druckfeder 15 sorgt für eine angepaßte Meßkraft. Der Wegaufnehmer 21 wandelt die axiale Bewegung in ein elektrisches Signal um und ist mit einem flexiblen Gummischlauch 24 mit dem Grundgerät 4 verbunden. Der Gummischlauch 24 dient sowohl zum Transport des Meßkopfes 9 als auch zur Aufnahme eines elektrischen Signalkabels 36, welches von dem Wegaufnehmer 21 zur elektrischen Meßwertauswerteeinheit mit Mikroprozessor 29 geführt wird.

Über das eingesetzte Reibrad 25 und dem damit verbundenen Drehgeber, der die mechanische Bewegung des Schlauches 24 in ein elektrisches Signal umwandelt, wird die momentane Position des Meßkopfes 9 zur Rohrmündung 33 bestimmt. Das Rohrgehäuse 5 ermöglicht die notwendige Position in axialer und radialer Richtung zu dieser Rohrmündung 33. Das Gehäuse 6 für die Aufnahme der zweiten Meßeinheit 4 ist aus Aluminium hergestellt und fest mit dem Rohrgehäuse 5 verbunden. Neben der Längenmeßeinrichtung 25 dient das Gehäuse 6 der geschützten Aufnahme der Meßwertauswerteeinheit mit Mikroprozessor 29 und der elektrischen Spannungsversorgung 30.

**Patentansprüche**

1. Vorrichtung zum Messen der Innendurchmesser von Rohren, insbesondere der Kaliber von Waffenrohren, im wesentlichen bestehend aus einem Meßkopf mit radial wirkenden Tastern, die mit einer axial beweglichen, unter Federkraft stehenden Stange wirkverbunden sind, welche mit einer Meßwerterfassungseinheit und einer Meßwertanzeige in Verbindung steht,
dadurch gekennzeichnet,
daß der Meßkopf (9) in einem Rohrgehäuse (5) axial beweglich angeordnet ist, in dem ein Kalibrierring (22) mit einem dem Solldurchmesser des Rohres (2) entsprechenden Innendurchmesser (7) für das Kalibrieren des Meßkopfes (9) einsetzbar ist, und die vom Meßkopf axial zurücklegbare Wegstrecke durch eine integrierte Längenmeßeinrichtung (25) erfaßbar ist, wobei der Meßkopf (9) und die Längenmeßeinrichtung (25) an eine gemeinsame Meßwerterfassungs- und -auswerteeinheit (29) angeschlossen sind.

2. Vorrichtung zum Messen nach Anspruch 1,
dadurch gekennzeichnet,
daß der Meßkopf (9) einen Wegaufnehmer (21) aufweist, der mechanisch mit der Längenmeßeinrichtung (25) und elektrisch mit der gemeinsamen Meßwerterfassungseinheit (29) verbunden ist.

3. Vorrichtung zum Messen nach den Ansprüchen 1 und 2,
dadurch gekennzeichnet,
daß der Meßkopf (9) mit einem elektrischen bzw. flexiblen Schlauch (24) verbunden ist, dessen axiale Bewegung durch ein Reibrad (25) abgenommen wird, und daß innerhalb des Schlauches (24) eine elektrische Leitung (36) vom Wegaufnehmer (21) zur gemeinsamen Meßwerterfassungseinheit (29) eingesetzt ist, und daß ferner an dem Schlauch (24) ein Endschalter (27) für die Lagebestimmung des Kalibriervorganges antastet, der ebenfalls mit der Meßwerterfassungs- und -auswerteeinheit (29) wirkverbunden ist.

4. Vorrichtung zum Messen nach Anspruch 1,
dadurch gekennzeichnet,
daß das Rohrgehäuse (5) für die Aufnahme des Meßkopfes (9) und des Wegaufnehmers (21) an das Gehäuse (6) für die Längenmeßeinrichtung (25) und für die Meßwerterfassungs- und -auswerteeinheit (29) angeschlossen ist, wobei das Rohrgehäuse (5) stirnseitig an der vorderen Stirnseite (33) des Rohres (2) anliegt und in einem Adapter bzw. einer Rohrmündungsbremse (8) radial und axial geführt ist.

**Claims**

1. Apparatus for measuring the internal diameters of pipes, in particular the calibre of weapon barrels, substantially comprising a measuring head having radially acting sensors which are actively connected to an axially movable rod which is under the force of a spring and which is connected to a measurement value detection unit and a measurement value display, characterized in that the measuring head (9) is arranged axially movably in a barrel housing (5) in which there may be inserted a calibrating ring (22) having an internal diameter (7) corresponding to the prescribed diameter of the barrel (2), for calibrating the measuring head (9), and the distance which may be covered axially by the measuring head (9) may be detected by means of an integrated length measuring device (25), the measuring head (9) and the length measuring device (25) being connected to a common measurement value detection and evaluation unit (29).

2. Apparatus for measuring according to Claim 1, characterized in that the measuring head (9) has a position encoder (21) which is connected mechanically to the length measuring device (25) and is connected electrically to the common measurement value detection unit (29).

3. Apparatus for measuring according to Claims 1 and 2, characterized in that the measuring head (9) is connected to an electrical or flexible hose (24), whereof the axial movement is taken up by a friction wheel (25), and in that there is set within the hose (24) an electrical line (36) from the position encoder (21) to the common measurement value detection unit (29), and in that furthermore a limit switch (27) scans across the hose (24) for the position setting and of the calibrating procedure and is also actively connected to the measurement value detection and evaluation unit (29).

4. Apparatus for measuring according to Claim 1, characterized in that the barrel housing (5) for receiving the measuring head (9) and the position encoder (21) is connected to the housing (6) for the length measuring device (25) and for the measurement value detection and evaluation unit (29), the barrel housing (5) on the end side bearing against the front end side (33) of the barrel (2) and being radially and axially guided in an adapter or a barrel mouth brake (8).

## Revendications

1. - Dispositif pour mesurer le diamètre intérieur de tubes, en particulier le calibre de tube d'armes, comprenant essentiellement une tête de mesure comportant des compas agissant radialement qui sont reliés fonctionnellement à une tige mobile axialement, soumise à la force d'un ressort, qui est en liaison avec une unité de détection de valeurs de mesure et un indicateur de valeurs de mesure , caractérisé en ce que la tête de mesure (9) est disposée de façon à être mobile axialement dans un boîtier tubulaire (5) dans lequel peut être introduit un anneau de calibrage (22) d'un diamètre intérieur (7) correspondant au diamètre prescrit du tube (2) pour le calibrage de la tête de mesure (9), et le trajet pouvant être parcouru axialement par la tête de mesure (9) peut être capté par un dispositif de mesure de longueurs intégré (25), la tête de mesure (9) et le dispositif de mesure de longueurs (25) étant reliés à une unité de détection et de traitement de valeurs de mesure commune (29).

2. - Dispositif de mesure selon la revendication 1, caractérisé en ce que la tête de mesure (9) comporte un capteur de déplacement (21) qui est relié mécaniquement au dispositif de mesure de longueurs (25) et électriquement à l'unité de détection de valeurs de mesure commune (29).

3. - Dispositif de mesure selon les revendications 1 et 2 , caractérisé en ce que la tête de mesure (9) est reliée à un tuyau (24) électrique ou flexible dont le mouvement axial est capté par une roue de friction (25), et en ce qu'un conducteur électrique (36) allant du capteur de déplacement (21) à l'unité de détection de valeurs de mesure commune (29) est introduit à l'intérieur du tuyau (24) ,et en ce qu'en outre un interrupteur fin de course (27) destiné à la détermination d'état du processus de calibrage palpe le tuyau (24), interrupteur qui est également relié fonctionnellement à l'unité de détection et de traitement de valeurs de mesure (29).

4. - Dispositif de mesure selon la revendication 1, caractérisé en ce que le boîtier tubulaire (5) destiné au logement de la tête de mesure (9) et du capteur de déplacement (21) est relié au boîtier (6) destiné au dispositif de mesure de longueurs et à l'unité de détection et de traitement des valeurs de mesure (29), le boîtier tubulaire (5) étant frontalement en contact avec la face frontale antérieure (33) du tube (2) et étant guidé radialement et axialement dans un adaptateur ou un frein de bouche (8).